# EUROPEAN PATENT APPLICATION

(11) **EP 2 774 832 A1**
(43) Date of publication of application: **10.09.2014**
(21) Application number: 14385201.0
(22) Date of filing: 04.03.2014
(51) Int. Cl.: B62K 15/00

(54) **Multi-size foldable frame for tricycles and bicycles**

(30) Priority: 05.03.2013 ES 201300263
(71) Applicant: Guerra Navas, Antonio Manuel, 01212 Salinillas de Buradon (Alava) (ES)
(72) Inventor: Guerra Navas, Antonio Manuel, 01212 Salinillas de Buradon (Alava) (ES)

(57) **Abstract**

A multi-size foldable frame for tricycles, comprising two halves, the front half comprises a head tube (3) to which two tubes (4, 5) are joined, joined to the head tube (3) there is a part (45) on which a front axle is fitted, the front axle comprising a tube on the ends of which knuckles (31) are placed, each knuckle (31) incorporates an axle for a front wheel (35) which is connected to a steering arm (46), the rear half comprises a seat tube (8), a bottom bracket (9) joined to the seat tube (8), left and right stays (6) joined to each other with two parts (11), the seat tube (8) is also joined to the parts (11), on the stays (6) end caps (7) are fitted, a clamp part (13) which incorporates a gripping mechanism (12) is joined to the stays (6).

## Description

### OBJECT OF THE INVENTION

The object of the present Invention Patent application is to register a frame for tricycles and bicycles that incorporates notable innovations and advantages compared to currently existing frames.

More specifically, the invention refers to a frame for tricycles and bicycles which improves the cyclist's comfort compared to existing frames, as it allows the saddle-to-handlebar distance to be regulated easily and simply by the user, without the need for tools, lets the best posture be found for multiple users, also facilitates getting on and off the tricycle or bicycle, thus offering greater general comfort for all users of the tricycle or bicycle, and can also be folded so that it occupies less space when not in use.

### BACKGROUND OF THE INVENTION

At present there is a great variety of models of frames for tricycles and bicycles. These are frames of different materials, shapes and colours, which are manufactured in different sizes, to cover the different heights/builds of possible users. The present invention has been developed with the aim of overcoming the drawbacks of these conventional frames, which as we know are generally built for one size and do not permit adaptation to users of larger or smaller sizes, thus limiting the use of the tricycle or bicycle to users of a similar size, or otherwise affecting the user's comfort and safety.

However, the applicant is not aware of the existence of a frame for tricycles and bicycles that allows the sizes to be regulated and can also be folded for storage, with the characteristics described in this application.

### DESCRIPTION OF THE INVENTION

The present invention has been developed with the aim of providing a frame for tricycles and bicycles that overcomes the above-mentioned drawbacks and also provides other additional advantages which will be evident from the description set out below.

The frame for tricycles and bicycles of the present invention is intended to facilitate the use of the same tricycle or bicycle by users of any height or build, and to facilitate its storage after use.

It comprises two halves, front and rear. The front half comprises the head tube to which the two lateral tubes are attached, to left and right. These tubes comprise a straight portion, running parallel to each other and parallel to the ground, a second curved portion and another straight portion that is joined at the end to the head tube, one of the tubes being joined to the heat tube near the top and the other near the bottom, giving rigidity to the assembly. Between them, in order to generate greater rigidity in the curved area, a metal plate is attached which joins the two tubes.

On the front portion of the head tube, when used for a tricycle, an inverted "U"-shape part is attached, which will support the front axle, comprising a cross tube, on the ends of which the knuckles that support the wheels are placed. This tube will have, halfway along its length, a transversely welded bushing which will house two bearings. Once placed on the "U"-shaped part, both parts will be joined with a through axle which is screwed onto the "U" and will carry out rotating shaft functions allowing an up-and-down rocking movement of the cross tube, limiting this movement through two elastic elements.

The cross tube is crossed vertically by two bolts, one on the left of the "U"-shaped part and the other on the right, which project from it on both sides and will act as stops.

On the ends of this cross tube, the knuckle supports will be placed axially. These will be comprised of two tubes of greater diameter, but significantly shorter, on each of which a lower strip and an upper plate will be attached. On the lower part of these plates facing the head tube there will be a semi-circular housing for the stops included on the cross tube and which limit axial movement inwards by colliding against them.

The plates also have a central lengthwise groove, aligned with the groove which the knuckle support also has in its central part, but of greater length. The side of the groove facing towards the head tube has a larger diameter at the end, and has been devised for a conical nut to be inserted into it to block the knuckle support in that position.

To facilitate axial movement between the cross tube and the tubes at the ends, an intermediate bushing of a sliding material will be placed between them.

The knuckle supports will be guided and blocked by threaded through rods placed once assembled with the cross tube and the bushing made of sliding material. The rods project from both the upper and lower side of the assembly, and one of their ends has a conical nut glued on, and another conical nut on the other end. So that both ends are separated at the same time when the nuts are loosened in order to fold the wheels, they have a spring on each end, which keeps the sides equidistant. Once the nuts are mounted, they prevent the knuckle support part from being removed totally from the cross tube, acting as a stop for rotation and as a security and blocking system.

On the exterior part of the plates facing the wheels, two knuckles, left and right, will be attached with screws, each of which incorporates an axle for the wheel and a lever arm, which through joints and threaded rods will be connected to the steering arm that runs inside the head tube and which will give the tricycle rotation. The knuckles will also have means of positioning the supports for the brake callipers.

This sliding knuckle support system will let the front half be folded, reducing the width between the front wheels of the tricycle for storage.

The rear half comprises the seat tube, the bottom bracket, the left lower and upper stays made in a single curved part and the right lower and upper stays made in the same way as the left stays. The two parts comprising the left and right stays are attached to each other symmetrically with two plates. Each of these plates has a hole in the centre and the seat tube passes through them, and is also attached to them. On the ends of the right and left lower and upper stays, the rear end caps are attached, which have horizontal grooves, where the wheel will be attached.

On the lower part of the right and left lower stays parallel to the ground, a part is attached which will act as a clamp, joining and holding the front and rear half of the frame. This part comprises two cylindrical cavities, both of them threaded lengthwise and facing each other to allow flexing during gripping. These parts are joined to each other through upper and lower plates that are parallel to each other and also parallel to the ground. This part can be manufactured by extrusion, forging or injection, in which case it is a single part.

To favour the sliding of the tubes of the front half of the frame on the clamp part of the rear half of the frame, two bushings made of Teflon or similar material will be inserted which adapt to the internal measurements of the clamp and the external measurements of the front tubes.

Centred on the upper part of the clamp a gripping mechanism will be fitted which will let the frame be blocked at the desired size.

The tubes of the front half of the frame are inserted through the cylindrical cavities of the clamp, sliding until the desired size is found, and then using the gripping mechanism to block the frame in this position.

To prevent the two halves of the frame from separately totalling once they have been joined, two stops with a larger diameter than the diameter of the clamp are attached to the ends of the two tubes of the front half of the frame which are inserted in the clamp, once they have passed through the interior of the clamp and have come out the other side, thus preventing separation of the two parts of the frame due to failure to tighten the clamp.

For storage after use, the gripping mechanism is loosened and the two parts of the frame are brought together as much as possible, blocking the frame in this position.

Thanks to all the aforesaid characteristics, a tricycle or bicycle frame is obtained that features robust manufacture, allowing the size to be regulated and simple storage.

Other characteristics and advantages of the multi-size foldable frame for tricycles and bicycles that is the object of this invention will become evident from the description of a preferred, but not exclusive, embodiment, which is illustrated by way of example and not as a limitation in the accompanying drawings, in which:

### BRIEF DESCRIPTION OF THE DRAWINGS

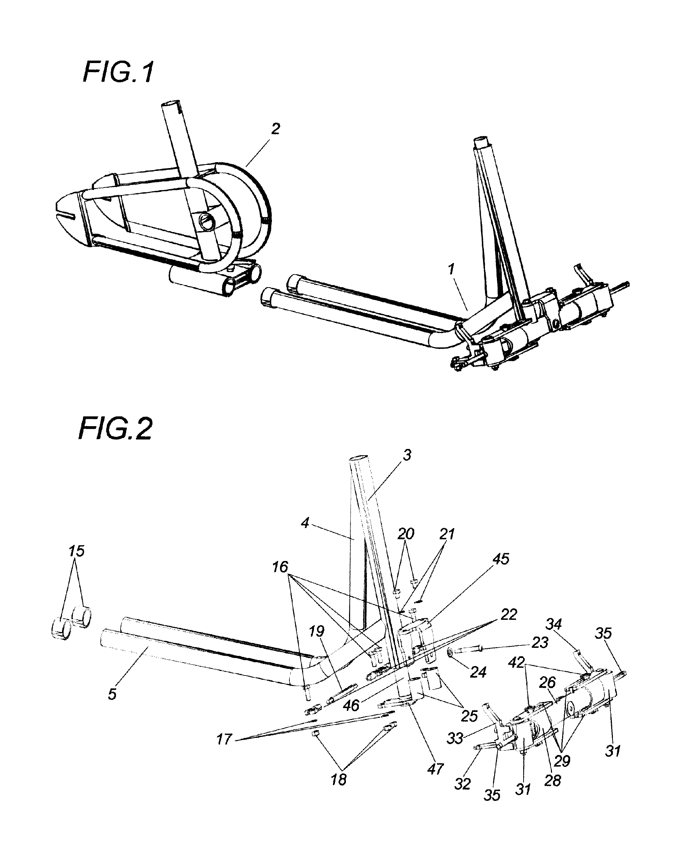

Figure 1.- Is a perspective view of the two halves comprising the frame of the present invention;
Figure 2.- Is an exploded perspective view of the components of the front part of the frame of the present invention;

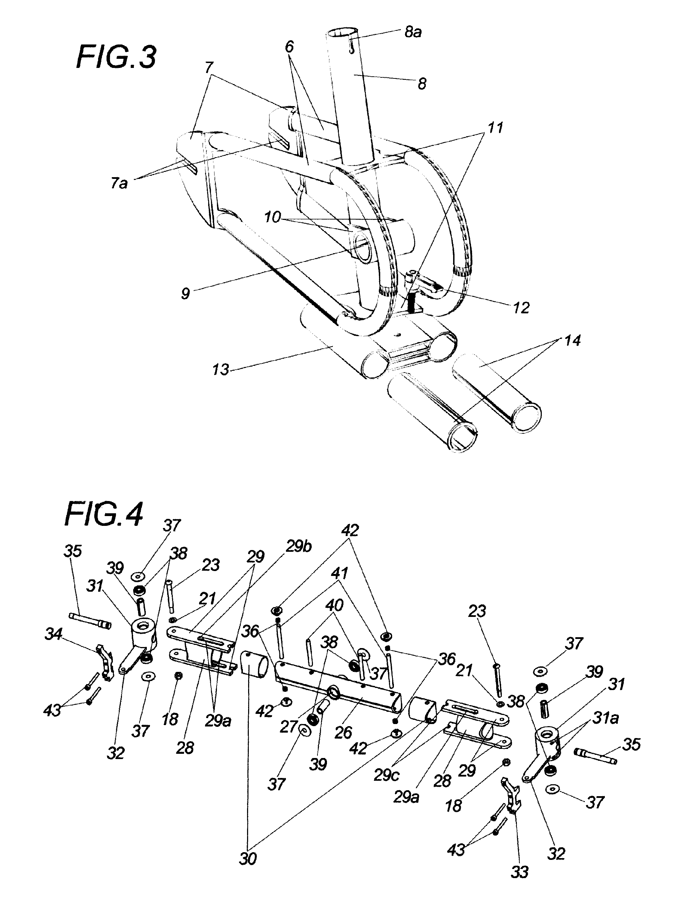

Figure 3.- Is a perspective view of the rear part of the frame of the present invention.
Figure 4.- Is an exploded perspective view of the front axle assembly for the tricycle option with all its components.
Figure 5.- Is a perspective view from below of the multi-size foldable frame for tricycles and bicycles.
Figure 6.- Is a perspective view of the multi-size foldable frame for tricycles and bicycles in its folded position.
Figure 7.- Is a perspective view of the multi-size foldable frame for tricycles and bicycles in its extended position.
Figure 8.- Is a perspective view of an embodiment of the multi-size foldable frame for tricycles and bicycles, in this case for a bicycle.

### DESCRIPTION OF A PREFERRED EMBODIMENT

In light of the accompanying figures, a specific embodiment of the multi-size foldable frame for tricycles and bicycles comprises two halves, front (1), and rear (2).

The front half (1) comprises the head tube (3) to which the two lateral tubes are attached, to left (4) and right (5). These tubes comprise a straight portion where both tubes run parallel to each other and parallel to the ground, a second curved portion and another straight portion that is joined at the end to the head tube (3), giving rigidity to the assembly; the tubes (4 and 5) are joined to each other by a strip (44).

On the front portion of the head tube (3), an inverted "U"-shape part (45) is attached, which will support the front axle, comprising a cross tube (26), on the ends of which the knuckles (28) that support the wheels are placed. This tube will have, halfway along its length, a transversely welded bushing (27) which will house two bearings (38). These bearings are separated from each other by a bushing (39) and once this is placed on the "U"-shaped part (45), both parts will be attached with a through axle (23) together with a washer (24) which is screwed onto the part (45) and will carry out rotating shaft functions allowing an up-and-down rocking movement of the cross tube (26). This movement will be limited by two elastic elements (25) which will be attached to the part (45) by screws (20) and washers (21).

The cross tube (26) is crossed by two bolts (40), on the left and the right, which act as stops.

On the ends of the cross tube (28), the knuckle supports (28) will be placed axially. These are of greater diameter, but significantly shorter, and two plates (29), below and above, are affixed to them. On the lower part of these plates facing the head tube there will be a semi-circular housing (29c) for the stop that limits axial movement inwards by colliding against the stop (40) fitted on the cross tube (26) for this function.

The plates (29) also have a central lengthwise groove, aligned with the groove which the knuckle support (28) also has in its central part, but of greater length. The interior side of this groove has a larger diameter at the end (29b), devised for conical nuts (42) to be placed in it to block the knuckle support (28) in that position.

To facilitate axial movement between the cross tube (26) and the knuckle supports (28), a bushing made of a sliding material (30) will be affixed to the cross tube.

The knuckle supports (28) will be guided and blocked by threaded through rods (41) placed once the knuckles (28) have been assembled with the cross tube (26) and the bushing (30); the threaded rods (41) project from both the upper and lower side of the assembly, and have a conical nut (42) on both ends. The nut on one end will be glued to the rod (41). So that both ends are separated at the same time when the nuts (42) are loosened in order to fold the wheels, they have a spring (36) inserted in the rod on both sides, which keeps the sides equidistant. Once the nuts (42) are tightened, these through rods prevent the knuckle support (28) from being removed totally from the cross tube (26), acting as a stop for rotation and as a security and blocking system.

On the exterior part of the plates (29) facing the wheels, two knuckles, left and right (31), will be attached with screws (23), washers (21) and nuts (18), each of such knuckles incorporating an axle for the wheel (35) and a lever arm (32), which through joints (22) and threaded rods (19) will be connected to the steering arm (46) by the part (47) attached at the end; the steering arm (46) runs inside the head tube (3) and will give the tricycle rotation. The knuckles (31) have threaded holes (31a) where the supports for the brake callipers (33) will be attached with the screws (43).

The rear half (2) comprises the seat tube (8), which has a groove (8a) on the upper part to facilitate placing of the gripping means for a seat post, the bottom bracket (9) will be attached to the seat tube (8) with plates (10) on each side; the left and right lower and upper stays (6) are joined to each other symmetrically with two plates (11), which each have a hole in the centre and the seat tube (8) passes through them, and is also joined to them. On the ends of the right and left lower and upper stays (6) the rear end caps (7) are attached, which have horizontal grooves (7a), where the wheel will be fitted.

On the lower part of the stays (6) parallel to the ground, the clamp part is attached.

To favour the sliding of the tubes (4 and 5) on the clamp part (13), two hollow bushings made of sliding material will be inserted, threaded all along their length (14) which adapt to the internal measurements of the clamp (13) and the external measurements of the tubes (4 and 5).

Centred on the clamp (13) a gripping mechanism (12) will be fitted which will let the tubes (4 and 5) be blocked in the desired position.

The tubes (4 and 5) are inserted into the clamp (13), sliding until the desired size is found, then the gripping mechanism (12) is used to block the position.

Once the tubes (4 and 5) have been inserted into the clamp (13), they are made to project from the other end of the clamp and two stops (15) are attached, of a greater diameter than the diameter of the clamp (13), thus preventing the two parts of the frame (1 and 2) from separating.

For storage after use, the gripping mechanism (12) is loosened and the assembly of tubes (4 and 5) which are joined together thanks to the part (44) are slid through the clamp (13) as far as possible, blocking them in this position.

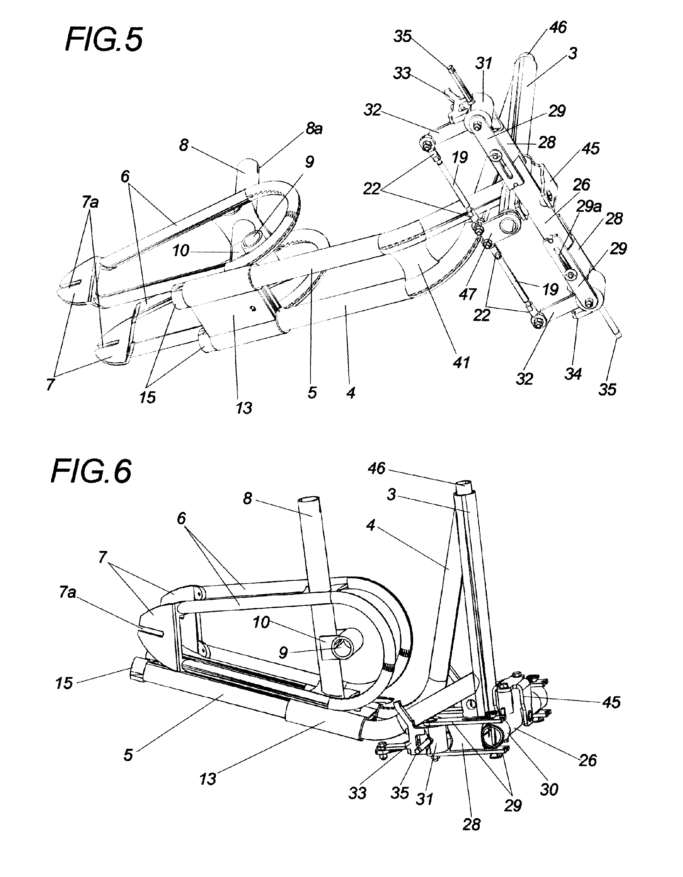

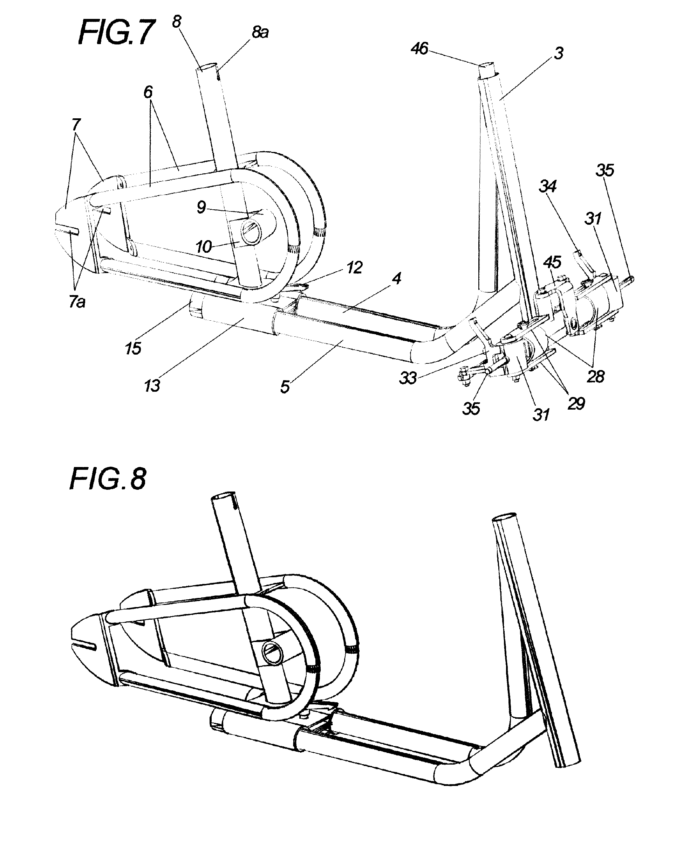

In figures 6 and 7 the purpose of the multi-size foldable frame for tricycles and bicycles described can be seen more clearly.

Finally, in figure 8 a specific embodiment for bicycles can be found, of the multi-size foldable frame for tricycles and bicycles described here.

The details, forms, sizes and other accessory elements as well as the materials used in the manufacture of the multi-size foldable frame for tricycles and bicycles of the invention may be suitably replaced by others that are technically equivalent and do not depart from the essence of the invention or the scope defined by the claims set out below.

## Claims

1. Multi-size foldable frame for tricycles and bicycles, **characterized in that** it comprises two independent front and rear halves (1 and 2), the front half (1) comprising the head tube (3) to which two tubes (4) and (5) are joined, which comprise a straight part where both tubes run parallel to each other and parallel to the ground, a second curved part and another straight part that is joined to the head tube (3) at the end; tubes (4 and 5) are joined to each other with a part (44); attached to front part of the head tube (3) there is a part (45), which will support the front axle, comprising a cross tube (26), at the ends of which the supports for the knuckles (28) are placed, this tube having halfway along its length a bushing (27) attached transversally which houses two bearings (38); once placed on the part (45) the two will be joined using a through axle (23) which is screwed onto the part (45) allowing an up-and-down rocking movement of the cross tube (26), this movement being limited by two elastic elements (25) which will be attached to the part (45); the cross tube (26), is crossed by two bolts (40), on the left and the right, which act as stops; on the ends of the cross tube (26), the knuckle supports (28) will be placed axially, which are of greater diameter, but significantly shorter, affixed to which there are two plates (29), below and above, which will have a semi-circular housing (29c) on the interior end for the stop (40) fitted on the cross tube (26) for this function; the plates (29) have a central lengthwise groove (29a), aligned with the groove which the knuckle support (28) has, but of greater length, this groove has a larger diameter at the end (29b), which allows conical nuts (42) to be placed in it to block the knuckle support (28) **in that** position. To facilitate axial movement between the cross tube (26) and the knuckle supports (28), a bushing made of a sliding material (30) will be affixed to the cross tube (26). The knuckle supports (28) will be guided and blocked by threaded through rods (41) placed once the knuckles (28) are assembled with the cross tube (26) and the bushing (30); the threaded rods (41) project from both the upper and lower side of the assembly, and have a conical nut (42) on both ends, the nut on one end will be glued to the rod (41); so that both ends are separated at the same time when the nuts (42) are loosened in order to fold the wheels, they have a spring (36) inserted in the rod on both sides, which keeps the sides equidistant. Once the nuts (42) are tightened, these through rods prevent the knuckle (28) support from being removed totally from the cross tube (26), acting as a stop for rotation and as a security and blocking system. On the exterior part of the plates (29) facing the wheels, two knuckles, left and right (31), will be attached with screws (23) and nuts (18), each of which incorporates an axle for the wheel (35) and a lever arm (32), which through joints (22) and threaded rods (19) will be connected to the steering arm (46) by the part (47) attached at the end; the steering arm (46) runs inside the head tube (3) and will give the tricycle rotation. The knuckles (31) have threaded holes (31a) where the supports for the brake callipers (33) will be attached with the screws (43); the rear half (2) comprises the seat tube (8), which has a groove (8a) on the upper part to facilitate placing of the gripping means for a conventional seat post, a bottom bracket (9) which will be attached to the seat tube (8) with plates (10) on each side; the left and right lower and upper stays (6) are attached to each other symmetrically with two parts (11), which each have a hole in the centre and the seat tube (8) passes through them, and is also attached to them. On the ends of the right and left lower and upper stays (6) the rear end caps (7) are attached, which have horizontal grooves (7a), where the wheel will be fitted; on the lower part of the stays (6) parallel to the ground, a clamp part (13) is attached, which incorporates a gripping mechanism (12).

2. Multi-size foldable frame for tricycles and bicycles, according to claim 1, **characterized in that** in order to favour the sliding of the tubes (4 and 5) on the clamp part (13), two hollow bushings made of sliding material will be inserted in it, threaded all along their length (14) which adapt to the internal measurements of the clamp (13) and the external measurements of the tubes (4 and 5).

3. Multi-size foldable frame for tricycles and bicycles, according to claim 1, **characterized in that** centred on the clamp (13) a gripping mechanism (12) will be fitted which will let the tubes (4 and 5) be blocked in the desired position.

4. Multi-size foldable frame for tricycles and bicycles, according to claim 1, **characterized in that** once the tubes (4 and 5) are introduced into the clamp (13), they project from the other end of the clamp and two stops (15) are fitted, of a greater diameter than the diameter of the clamp (13), thus preventing the two parts of the frame (1 and 2) from separating.

5. Multi-size foldable frame for tricycles and bicycles, according to claim 1, **characterized in that** the knuckle supports (28) have a mechanism that allows them to be removed from the cross tube (26) and turned backwards.

6. Multi-size foldable frame for tricycles and bicycles, according to claim 1, **characterized in that** the cross tube (26) will have an up-and-down rocking movement which will be limited by elastic elements (25).
